# EUROPÄISCHE PATENTSCHRIFT

(11) **EP 3 248 517 B1**
(45) Veröffentlichungstag und Bekanntmachung des Hinweises auf die Patenterteilung: **12.06.2019**
(21) Anmeldenummer: 17164988.2
(22) Anmeldetag: 05.04.2017
(51) Int. Cl.: A47J 31/06

(54) **AUTOMATISCHE BRÜHGRUPPE FÜR EINE KAFFEEMASCHINE, KAFFEEMASCHINE UND VERFAHREN ZUM ZUBEREITEN EINER KAFFEEZUBEREITUNGSART**
AUTOMATIC BREWING ELEMENT FOR A COFFEE MACHINE, COFFEE MACHINE AND METHOD FOR PREPARING A COFFEE PREPARATION TYPE
DISPOSITIF D'ÉBOUILLANTAGE AUTOMATIQUE POUR UNE MACHINE À CAFÉ, MACHINE À CAFÉ ET PROCÉDÉ DE PRÉPARATION D'UN TYPE DE PRÉPARATION DE CAFÉ

(30) Priorität: 25.05.2016 DE 102016209135
(43) Veröffentlichungstag der Anmeldung: 29.11.2017
(73) Patentinhaber: SIELAFF GMBH & CO. KG AUTOMATENBAU, 91567 Herrieden (DE)
(72) Erfinder: Wachsmuth, Christoph, 91608 Geslau (DE); Schindler, Bernhard, 91572 Bechhofen (DE)
(74) Vertreter: Isarpatent

(56) Entgegenhaltungen:
- WO-A1-2015/004613
- WO-A2-2009/049430
- US-A1- 2015 257 580

## Beschreibung

### GEBIET DER ERFINDUNG

Die vorliegende Erfindung betrifft eine automatische Brühgruppe für oder in einer Kaffeemaschine zum Zubereiten einer Kaffeezubereitungsart. Die vorliegende Erfindung betrifft ferner eine Kaffeemaschine und ein Verfahren zum Zubereiten einer Kaffeezubereitungsart.

### TECHNISCHER HINTERGRUND

Kaffeemaschinen und Kaffeevollautomaten sind an sich bekannt, sodass auf deren Aufbau und deren Funktion nicht näher eingegangen werden muss. Unter einem Kaffeevollautomat ist eine Kaffeemaschine zu verstehen, die z.B. nach der Espresso-Methode vollautomatisch diverse Kaffeezubereitungsarten, wie etwa Espresso, Cappuccino, Kaffee und dergleichen, produzieren kann. Hierzu werden Kaffeebohnen meist frisch gemahlen, wobei das so erzeugte Kaffeemehl in eine eigens zum Aufbrühen des Kaffees vorgesehene Brühgruppe gebracht wird. Eine solche Brühgruppe ist ein Bauteil in Kaffeevollautomaten oder anderen Kaffeemaschinen, in dem der Brühprozess für die Kaffeezubereitung erfolgt. Eine Brühgruppe kann je nach Hersteller überwiegend aus Kunststoff bestehen oder (bis auf die Dichtungen) komplett aus Metall sein.

Der Brühprozess einer Brühgruppe besteht im Allgemeinen aus folgenden Schritten: Das Kaffeemehl, das vom Kaffeevollautomat pro Portion frisch gemahlen wird, fällt über einen Dosierer vom Mahlwerk in eine so genannte Brühkammer (Extraktionskammer). Das Kaffeemehl wird innerhalb der Brühkammer und unter Verwendung eines Druckkolbens verdichtet und auf diese Weise zu einem Kaffeekuchen verpresst, wodurch ein Kaffeekuchen entsteht. Eine gewünschte Wassermenge wird mittels einer Pumpe in die Brühkammer mit dem Kaffeekuchen gepresst und fließt nach Durchströmen des Kaffeekuchens als fertiger Kaffee aus der Brühgruppe heraus und durch den Kaffeeauslauf in die jeweilige Tasse. Die Brühkammer fährt in ihre ursprüngliche Position zurück und der Bodenkolben drückt den Kaffeekuchen (Kaffeesatz) heraus. Der Kaffeekuchen fällt in einen eignes dazu vorgesehenen Tresterbehälter.

Je nach gewünschter Kaffeestärke, Kaffeezubereitungsart, Kaffeekonzentration und/oder Flüssigkeitsvolumen des Kaffees wird dabei eine unterschiedliche Menge an Kaffeemehl benötigt, die im Schritt des Portionierens geeignet portioniert werden muss. Aus dem Stand der Technik sind Brühgruppen bekannt, die Brühkammern für die Aufnahme einer variablen Menge an Kaffeematerial aufweisen. Derartige Brühkammern mit einem variablen Fassungsvermögen sind also dazu ausgebildet, Kaffeekuchen mit verschiedenen Höhen bei gleichbleibendem Querschnitt aufzunehmen.

So beschreibt die EP 1 625 813 A1 zum Beispiel eine Brühgruppe mit einer Brühkammer, die an eine verwendete Menge an Kaffeemehl anpassbar ist. Um während des Brühvorgangs eine gleichmäßige Druckverteilung in der Brühkammer zu gewährleisten, kann die Höhe der Brühkammer durch ein Druckelement in der Brühkammer verändert werden.

Die EP 2 474 253 B1 beschreibt eine Brühgruppe mit einer veränderlichen Höhe der Brühkammer zur Verdichtung von Kaffeemehl mittels eines Kolbens und eines axialen Stellantriebes.

Die EP 380 450 A2 zeigt eine Anpassungsmöglichkeit der Höhe der Brühkammer an eine Kaffeemehlmenge mittels einer Feder zwischen einem Zylindermantel und einem Zylinderstößel.

Allen eben genannten Brühgruppen ist gemein, dass die Höhe, also die Dicke des Kaffeekuchens innerhalb der Brühkammer bei entsprechender Erhöhung der Kaffeemenge in gleicher Weise zunimmt. Dies ist aber nicht immer vorteilhaft, da dadurch z.B. die Wasserflüssigkeit mit einem höheren Druck auf den Kaffeekuchen aufgebracht werden muss und/oder eine längere Wegstrecke durch den Kaffeekuchen zurücklegen muss, wodurch bisweilen Bitterstoffe im Kaffee aufgenommen werden. Durch ein nicht abgestimmtes Durchmesser-Höhen-Verhältnis des Kaffeekuchens ist zudem eine optimale Extraktion des Kaffeekuchens aus der Brühkammer nicht oder zumindest nicht immer mehr gewährleistet.

Um zeitgleich eine größere Menge an Kaffeemehl aufzubrühen, zeigt die WO 2009/049430 eine Kaffeemaschine mit zwei Brühgruppen. Eine derartige Kaffeemaschine ist jedoch äußerst aufwendig, kostspielig und aufgrund deren Abmessungen zum Beispiel für den Privatgebrauch nur bedingt geeignet.

Die US 2015/0257580 A1 beschreibt eine Getränkezubereitungsvorrichtung, welche einen Einsatz zur Aufnahme von verschieden großen Zubereitungs-Kapseln aufweist.

### ZUSAMMENFASSUNG DER ERFINDUNG

Vor diesem Hintergrund liegt der Erfindung die Aufgabe zugrunde, eine verbesserte Brühgruppe bereitzustellen.

Erfindungsgemäß wird diese Aufgabe durch eine Brühgruppe mit den Merkmalen des Patentanspruchs 1 und/oder durch eine Kaffeemaschine mit den Merkmalen des Patentanspruchs 13 und/oder durch ein Verfahren mit den Merkmalen des Patentanspruchs 14 gelöst.

Demgemäß ist vorgesehen:
- Eine automatische Brühgruppe für eine Kaffeemaschine zum Zubereiten einer Kaffeezubereitungsart, mit einem rohrförmigen Gehäuse, in welchem zumindest ein erster Kolben axial beweglich angeordnet ist, um eine Brühkammer zur Aufnahme von Kaffeemehl und zum Aufbrühen des Kaffeegetränks zu bilden, mit einer Verstellvorrichtung, welche dazu ausgebildet ist, eine Querschnittsfläche und/oder einen Durchmesser der Brühkammer variabel zu verändern.
- Kaffeemaschine zum Zubereiten einer Kaffeezubereitungsart, mit einer Steuereinrichtung, welche dazu ausgebildet ist, aus einer benutzerseitig eingestellten und vorgegebenen Menge an Kaffeemehl einen Soll-Durchmesser der Brühkammer zu bestimmen, und mit einer erfindungsgemäßen automatischen Brühgruppe, deren Verstellvorrichtung den Durchmesser der Brühkammer entsprechend dem von der Steuereinrichtung bestimmten Soll-Durchmesser einstellt.
- Verfahren zum Zubereiten einer Kaffeezubereitungsart unter Verwendung einer erfindungsgemäßen automatischen Brühgruppe, mit den Schritten: Vorgeben einer Menge an Kaffeemehl, aus welcher das Kaffeegetränk zubereitet werden soll; Berechnen eines Soll-Durchmessers der Brühkammer abhängig von der vorgegebenen Menge an Kaffeemehl; Einstellen des berechneten Soll-Durchmessers mittels der Verstellvorrichtung; Einfüllen des Kaffeemehls in die Brühkammer mit dem eingestellten Soll-Durchmesser; Verdichten des Kaffeemehls durch Verfahren des ersten Kolbens.

Ein Kern der vorliegenden Erfindung besteht darin, eine automatische Brühkammer für eine Kaffeemaschine mit einem veränderlichen Durchmesser zu schaffen. Dies ermöglicht ein konstantes und optimales Verhältnis zwischen der Höhe und dem Durchmesser der Brühkammer und damit des dort vorhandenen Kaffeekuchens, um eine optimale Extraktion des Kaffeemehls auch bei verschiedenen Kaffeemehlvolumina bereitzustellen. Insbesondere lassen sich damit die verschiedensten Kaffeestärken, Kaffeezubereitungsarten, Kaffeekonzentrationen und/oder Flüssigkeitsvolumina bedarfsgemäß einstellen. Die Anpassung bzw. Modifikationsmöglichkeit der Brühkammer in deren Durchmesser gewährleistet zudem auch bei großen Kaffeemehlmengen einen authentischen, nicht bitteren Kaffeegeschmack.

Zudem ist eine derartige Brühgruppe besonders flexibel, kostengünstig herstellbar und platzsparend.

Vorteilhafte Ausgestaltungen und Weiterbildungen ergeben sich aus den weiteren Unteransprüchen sowie aus der Beschreibung unter Bezugnahme auf die Figuren der Zeichnung.

In einer bevorzugten Ausgestaltung der Erfindung ist die Brühgruppe zudem dazu ausgebildet, für die Aufnahme des Kaffeemehls neben dem Durchmesser auch die Höhe der Brühkammer variabel einzustellen. Hierdurch wird eine noch größere Flexibilität der Brühkammer für verschiedene Kaffeemehlvolumen erreicht, da das Kaffeemehlvolumen einerseits über die Variation des Durchmessers als auch durch die Variation der Höhe der Brühkammer und somit der Dicke des damit erzeugten Kaffeekuchens eingestellt wird. Besonders vorteilhaft wird hierdurch also ein konstantes Verhältnis von Durchmesser zu Höhe der Brühkammer gewährleistet werden. Dies gewährleistet unter anderem einen gleichbleibenden Kaffeegeschmack bei verschiedenen Kaffeemehlvolumina.

In einer bevorzugten Ausgestaltung der Erfindung ist die Verstellvorrichtung derart eingerichtet, dass diese für die Aufnahme des Kaffeemehls vor dem Brühvorgang eine konstante Höhe der Brühkammer einstellt. Demgemäß wird also lediglich der Durchmesser der Brühkammer eingestellt, was eine verringerte bauliche Komplexität der erfindungsgemäßen Brühgruppe zur Folge hat.

In einer bevorzugten Ausgestaltung ist die Verstellvorrichtung dazu ausgebildet, den Durchmesser der Brühkammer stufenlos einzustellen. Eine solche stufenlose Einstellung der Brühkammer kann beispielsweise mittels eines Elastomers erfolgen. Die stufenlose Einstellmöglichkeit der Brühkammer steigert die Flexibilität und die Anpassungsfähigkeit der Brühkammer an verschiedene Kaffeemehlvolumina.

In einer bevorzugten Ausgestaltung ist die Verstellvorrichtung vollständig von dem Gehäuse umschlossen. Das rohrförmige Gehäuse ist dabei zylinderförmig ausgebildet. Die Verstellvorrichtung weist zumindest einen äußeren Zylinder und einen inneren Zylinder, der innerhalb des äußeren Zylinders axial beweglich ausgebildet ist, auf. Somit gewährleistet die Brühgruppe bereits eine deutlich erhöhte Flexibilität bei einer gleichzeitig geringen Komplexität der Bauform. Insbesondere wird auf diese Weise sehr einfach die Variation des Durchmessers der Brühkammer realisiert. Eine derartige Verstellvorrichtung zeichnet sich zudem durch eine besonders robuste Bauart aus, die wenig fehleranfällig ist und daher einen geringen Wartungsaufwand benötigt.

Indem zwischen dem äußeren Zylinder und dem inneren Zylinder zumindest ein weiterer Zylinder ausgebildet ist, lassen sich die Variation des Durchmessers und damit die Flexibilität weiter erhöhen.

In einer bevorzugten Ausgestaltung ist der erste Kolben verstellvorrichtungsseitig angeordnet. Ferner ist ein zweiter Kolben vorgesehen, der bezüglich der Brühkammer gegenüberliegend zum ersten Kolben angeordnet ist. Durch diese Konstruktion wird eine besonders einfache und robuste Einstellmöglichkeit der Höhe der Brühkammer gewährleitet.

Gemäß einer weiteren, vorteilhaften Ausgestaltung weisen der erste Kolben und der zweite Kolben brühkammerseitig jeweils eine Begrenzungsfläche auf, um vertikale Begrenzungswände der Brühkammer zu bilden. Hierbei weist der erste Kolben eine geringere Begrenzungsfläche auf als der zweite Kolben. Durch die unterschiedlich groß ausgebildeten Begrenzungsflächen des ersten und zweiten Kolbens lässt sich der veränderliche Durchmesser der Brühkammer besonders einfach realisieren. Insbesondere ist hier der Durchmesser der Brühkammer um den Differenzbetrag der Begrenzungsflächen der beiden Kolben veränderlich.

Gemäß einer bevorzugten Ausgestaltung der Erfindung ist der erste (und/oder zweite) Kolben starr mit der Verstellvorrichtung ausgebildet.

Alternativ kann der erste (und/oder zweite) Kolben auch gegenüber der Verstellvorrichtung axial verschiebbar ausgebildet sein.

In einer bevorzugten Ausgestaltung der Erfindung weist die Brühgruppe zudem eine Steuereinrichtung auf. Die Steuereinrichtung ist mit dem ersten Kolben derart gekoppelt und derart ausgebildet ist, um die Position des ersten Kolbens sowie eine Stellung der Verstellvorrichtung einzustellen. Alternativ kann die Steuereinrichtung auch mit der Verstellvorrichtung oder mit dem ersten Kolben und der Verstellvorrichtung gekoppelt sein. Die Kopplung kann insbesondere mechanisch, hydraulisch, elektrisch und/oder elektronisch realisiert sein.

In einer weiteren, besonders vorteilhaften Ausgestaltung einer erfindungsgemäßen Brühgruppe sind der erste Kolben, der zweite Kolben und/oder die Verstellvorrichtung längs einer gemeinsamen, horizontalen Achse der Brühkammer angeordnet. Hierdurch werden insbesondere baulich günstige Abmessungen sowie die Kompaktheit der Brühgruppe gewährleistet.

Alternativ können der erste Kolben sowie die Verstellvorrichtung auch längs einer vertikalen Achse der Brühkammer angeordnet sein.

In einer bevorzugten Ausgestaltung der Erfindung weist das rohrförmige Gehäuse einen ersten Gehäuseabschnitt und zumindest einen zweiten Gehäuseabschnitt auf, wobei der erste Gehäuseabschnitt einen zum zweiten Gehäuseabschnitt verschiedenen Durchmesser aufweist, wobei die Verstellvorrichtung ausgebildet ist, den ersten Gehäuseabschnitt oder den zweiten Gehäuseabschnitt als Brühkammer auszubilden. Auf diese Weise kann ein gewünschter Solldurchmesser des zu formenden Kaffeekuchens eingestellt werden. Ferner lässt sich auf diese Weise der Durchmesser der Brühkammer einstellen. Ebenfalls ist es möglich, das Gehäuse auch weitere Gehäuseabschnitte aufweist, welche jeweils unterschiedliche Durchmesser aufweisen.

Die obigen Ausgestaltungen und Weiterbildungen lassen sich, sofern sinnvoll, beliebig miteinander kombinieren. Weitere mögliche Ausgestaltungen, Weiterbildungen und Implementierungen der Erfindung umfassen auch nicht explizit genannte Kombinationen von zuvor oder im Folgenden bezüglich der Ausführungsbeispiele beschriebenen Merkmale der Erfindung. Insbesondere wird dabei der Fachmann auch Einzelaspekte als Verbesserungen oder Ergänzungen zu der jeweiligen Grundform der vorliegenden Erfindung hinzufügen.

### INHALTSANGABE DER ZEICHNUNG

Die vorliegende Erfindung wird nachfolgend anhand der in den schematischen Figuren der Zeichnungen angegebenen Ausführungsbeispiele näher erläutert. Es zeigen dabei:
- Fig. 1: eine perspektivische Schnittdarstellung einer erfindungsgemäßen Brühgruppe in einer ersten Stellung;
- Fig. 2: eine perspektivische Schnittdarstellung einer erfindungsgemäßen Brühgruppe in einer zweiten Stellung;
- Fig. 3: einen seitlichen Querschnitt einer erfindungsgemäßen Brühgruppe;
- Fig. 4: einen seitlichen Querschnitt einer erfindungsgemäßen Brühgruppe;
- Fig. 5: einen seitlichen Querschnitt einer erfindungsgemäßen Brühgruppe;
- Fig. 6: einen seitlichen Querschnitt einer erfindungsgemäßen Brühgruppe;
- Fig. 7: eine seitlichen schematische Schnittsicht einer erfindungsgemäßen Brühgruppe;
- Fig. 8: eine schematische Schnittansicht einer weiteren Ausführungsform einer erfindungsgemäßen Brühgruppe;
- Fig. 9: eine schematische Schnittansicht der weiteren Ausführungsform der erfindungsgemäßen Brühgruppe in einer ersten Stellung;
- Fig. 10: eine schematische Schnittansicht der weiteren Ausführungsform der erfindungsgemäßen Brühgruppe in einer zweiten Stellung; und
- Fig. 11: eine schematische Schnittansicht der weiteren Ausführungsform der erfindungsgemäßen Brühgruppe in einer dritten Stellung.

Die beiliegenden Zeichnungen sollen ein weiteres Verständnis der Ausführungsformen der Erfindung vermitteln. Sie veranschaulichen Ausführungsformen und dienen im Zusammenhang mit der Beschreibung der Erklärung von Prinzipien und Konzepten der Erfindung. Andere Ausführungsformen und viele der genannten Vorteile ergeben sich im Hinblick auf die Zeichnungen.

Die Elemente der Zeichnungen sind nicht notwendigerweise maßstabsgetreu zueinander gezeigt.

In den Figuren der Zeichnung sind gleiche, funktionsgleiche und gleich wirkende Elemente, Merkmale und Komponenten - sofern nichts Anderes ausgeführt ist -jeweils mit denselben Bezugszeichen versehen.

### BESCHREIBUNG VON AUSFÜHRUNGSBEISPIELEN

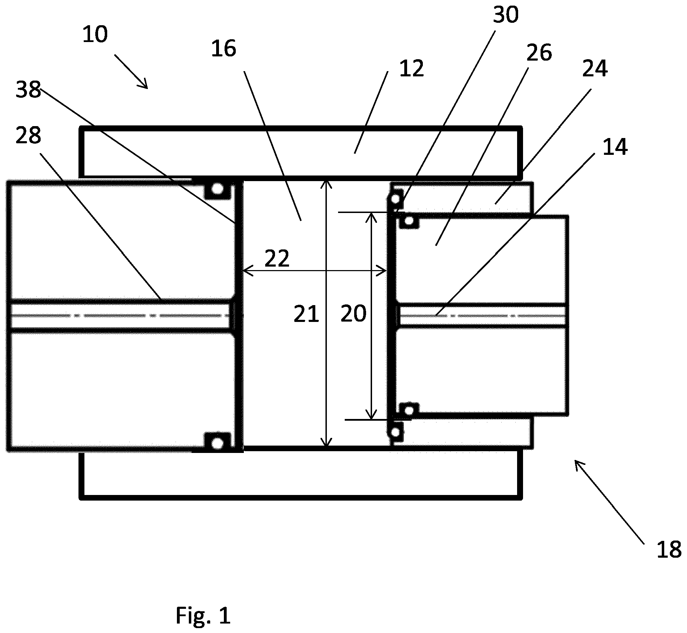

Figur 1 zeigt eine perspektivische Schnittdarstellung einer erfindungsgemäßen Brühgruppe 10 in einer ersten Stellung. Die hier mit Bezugszeichen 10 bezeichnete Brühgruppe weist ein Gehäuse 12, eine Brühkammer 16 innerhalb des Gehäuses 12, eine Verstellvorrichtung 18, einen ersten Kolben 14 sowie einen zweiten Kolben 28 auf. Das Gehäuse 12 der Brühgruppe 10 hat hier eine etwa hohlzylinderförmige Form. Die Brühkammer 16 unterteilt das Gehäuseinnere in zwei Bereiche, einen verstellvorrichtungsseitigen, rechten Bereich und einen dazu gegenüberliegenden, linken Bereich.

Beispielhaft ist in Figur 1 ein zweiter Kolben 28 linksseitig der Brühkammer 16 ausgebildet, um eine vertikale Begrenzungsfläche 38 der Brühkammer 16 zu bilden.

Rechtseitig der Brühkammer 16 befindet sich die Verstellvorrichtung 18, in welcher der erste Kolben 14 axial verschieblich angeordnet ist. Die Verstellvorrichtung 18 bildet zusammen mit dem ersten Kolben 14 eine vertikale Begrenzungsfläche 30 rechtseitig der Brühkammer 16.

Die Verstellvorrichtung 18 der Brühgruppe 10 umfasst einen äußeren hohlzylinderförmigen Zylinder 24 sowie einen inneren Zylinder 26. Der äußere Zylinder 24 und der innere Zylinder 26 sind gegeneinander axial verschiebbar, um den Durchmesser der Brühkammer 16 einzustellen, indem der innere Zylinder 26 gegenüber dem äußeren Zylinder 24 positioniert wird. Zudem kann durch die Verstellung des äußeren Zylinders 24 sowie des inneren Zylinders 26 auch die Höhe 22 der Brühkammer 16 eingestellt werden.

Die Brühkammer 16 der Brühgruppe 10 kann z. B. mit zwei verschiedenen Durchmessern 20, 21 der Brühkammer 16 betrieben werden. Der erste mögliche Durchmesser 20 der Brühkammer 16 entspricht dem Innendurchmesser des äußeren Zylinders 24 bzw. den Außendurchmesser des inneren Zylinders 26 der Verstellvorrichtung 18. Der zweite mögliche Durchmesser 21 der Brühkammer 16 entspricht dem Innendurchmesser des Gehäuses 12 bzw. dem Außendurchmesser des äußeren Zylinders 24. Offensichtlich ist der erste mögliche Durchmesser 20 der Brühkammer 16 kleiner als der zweite mögliche Durchmesser 21 der Brühkammer 16.

In Figur 1 ist die Verstellvorrichtung 18 derart positioniert, dass die Brühkammer 16 den zweiten Durchmesser 21, der dem Innendurchmesser des Gehäuses 12 entspricht, aufweist. Diese Stellung entspricht der Position der Verstellvorrichtung 18, in der der innere Zylinder 26, der äußere Zylinder 24 sowie der erste Kolben 14 brühkammerseitig bündig zueinander abschließen.

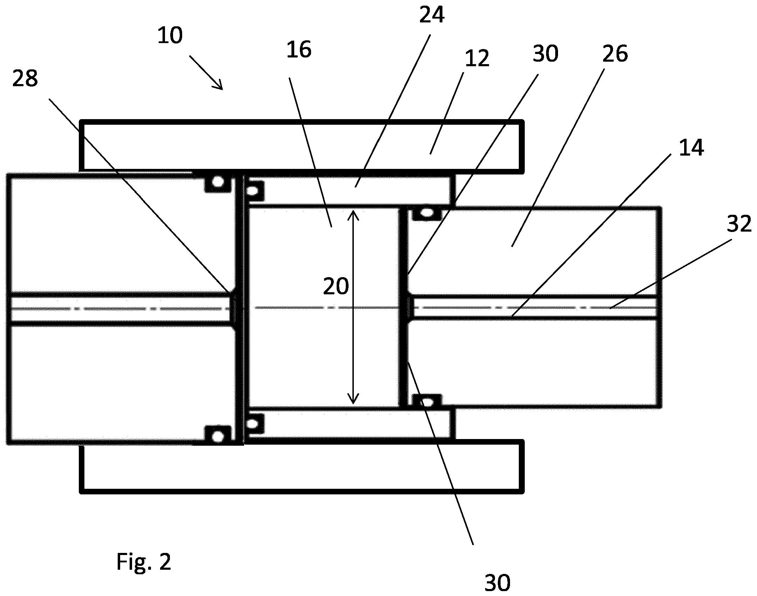

Figur 2 zeigt die Brühgruppe 10 aus Figur 1 in einer weiteren Stellung. In Figur 2 befindet sich der äußere Zylinder 24 der Verstellvorrichtung 18 am Anschlag des zweiten Kolbens 28. Infolgedessen bildet der äußere Zylinder 24 eine innere Umrandung der Brühkammer 16 und verringert somit den Durchmesser der Brühkammer 16 auf den Durchmesser 20. Die Stellung des inneren Zylinders 26 wurde hierbei nicht verändert. Der innere Zylinder 26 bildet mit dem ersten Kolben 14 die vertikale Begrenzungsfläche 30 rechtseitig der Brühkammer 16. Durch ein axiales Verschieben des ersten Kolbens 14 bzw. des inneren Zylinders 26 hin zur Brühkammer wird das Kaffeemehl zu einem Kaffeekuchen 36 verpresst.

Die Verstellvorrichtung 18 sowie der erste Kolben 14 und der zweite Kolben 28 der Brühgruppe 10 sind längs der horizontalen Achse 32 verschiebbar angeordnet. Beispielsweise sind die Kolben mit einem elektrischen und/oder hydraulischen Aktor gekoppelt.

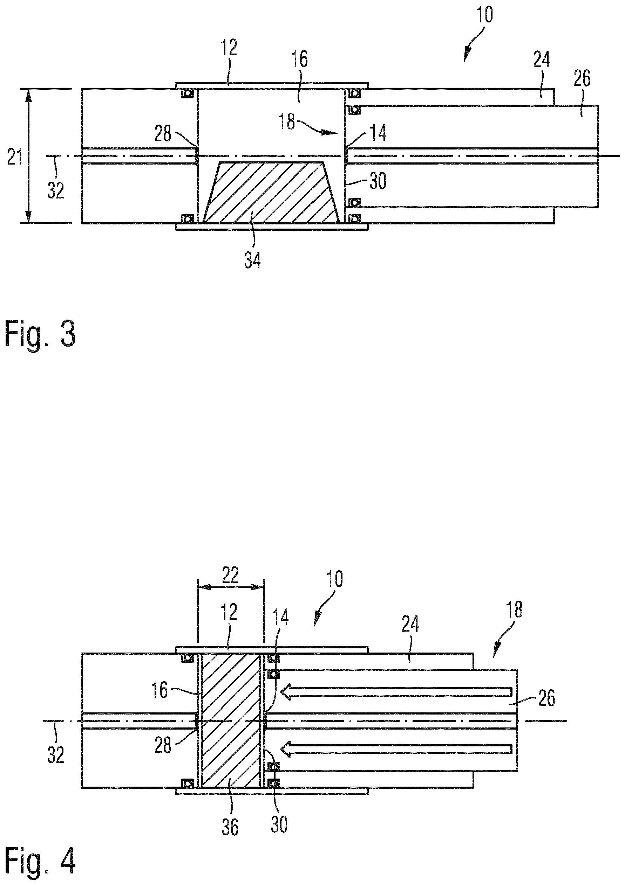

Figur 3 zeigt eine Schnittsicht der Brühgruppe 10, welche bereits mit Kaffeemehl 34 befüllt ist. Die Verstellvorrichtung 18 ist dabei derart positioniert, dass die Brühkammer 16 der Brühgruppe 10 den zweiten, größeren Durchmesser 21 aufweist. In der Brühkammer 16 der Brühgruppe 10 ist bereits noch nicht verpresstes Kaffeemehl 34 eingefüllt. Figur 3 zeigt die Brühgruppe 10 vor dem Brühvorgang.

Figur 4 zeigt die Brühgruppe 10 gemäß Figur 3, in welcher der Brühvorgang bereits im Gange ist. Das Kaffeemehl 34 in der Brühkammer 12 wurde bereits durch den Kolben 14 sowie durch die Verstellanordnung 18 komprimiert, so dass ein tablettenförmiger komprimierter Kaffeekuchen 36 entstanden ist. Um das Kaffeemehl zu komprimieren, wurden der erste Kolben 14 und die Verstellvorrichtung 18 samt dem äußeren Zylinder 24 und dem inneren Zylinder 26 axial in Richtung des zweiten Kolbens 28 verfahren, so dass sich die Dicke bzw. Höhe 22 der Brühkammer 16 reduziert.

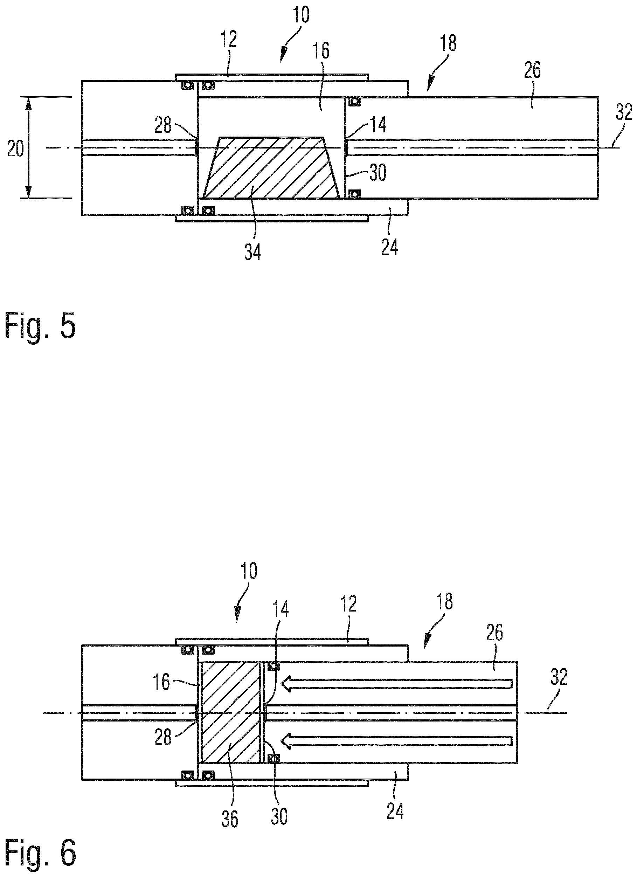

Figur 5 zeigt eine weitere Schnittsicht einer erfindungsgemäßen Brühgruppe 10 gemäß den Figuren 3 und 4 in einer weiteren Stellung. In die Brühgruppe 10 wurde bereits Kaffeemehl 34 eingefüllt. Der Brühvorgang ist noch nicht gestartet.

Im Gegensatz zu den Figuren 3 und 4 zeigen die Figuren 5 und 6 jeweils eine Brühkammer 16 der Brühgruppe 10 mit einem zum Durchmesser 21 kleineren Durchmesser 20.

Analog zu der Stellung der Brühkammer in Figur 2 befindet sich der äußere Zylinder 24 am Anschlag des zweiten Kolbens 28 und bildet somit eine innere Ummantelung der Brühkammer 16.

Figur 6 zeigt analog zu Figur 4 die Brühgruppe 10 in einer Schnittsicht während des Brühvorgangs. Analog zu Figur 4 wurde das Kaffeemehl 34 in Figur 6 durch ein axiales Verfahren bzw. Verstellen des inneren Zylinders 26 sowie des ersten Kolbens 14 zu einem Kaffeekuchen 36 komprimiert.

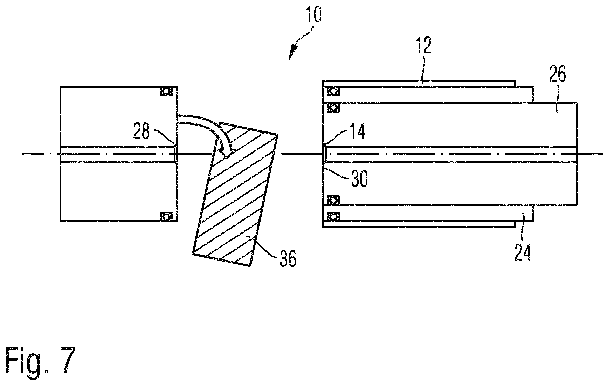

Figur 7 zeigt eine weitere Schnittsicht der Brühgruppe 10 nach dem Brühvorgang während des Auswerfens des Kaffeekuchens 36. Hierfür wurde der zweite Kolben 28 axial gegenüber dem Gehäuse 12 und der Verstellvorrichtung 18 verfahren, so dass der Kaffeekuchen 36 zwischen dem ersten Kolben 14 und dem zweiten Kolben 28 nach unten ausgeworfen werden kann.

In den vorstehend beschriebenen Figuren 1 bis 7 sind die Elemente der Brühgruppe 10, insbesondere der erste Kolben 14, die Verstellvorrichtung 18 samt dem äußeren Zylinder 24 und dem inneren Zylinder 26 sowie der zweite Kolben 28, maximal verschieblich bzw. beweglich ausgebildet. Diese Beweglichkeit gewährleistet eine hohe Flexibilität der Brühgruppe 10. Es sei jedoch verstanden, dass die vorliegende Erfindung auch durch eine deutlich geringere Flexibilität der Bauelemente realisiert werden kann. Insbesondere kann es ausreichend sein, wenn lediglich die Verstellvorrichtung 18 beweglich ausgebildet ist.

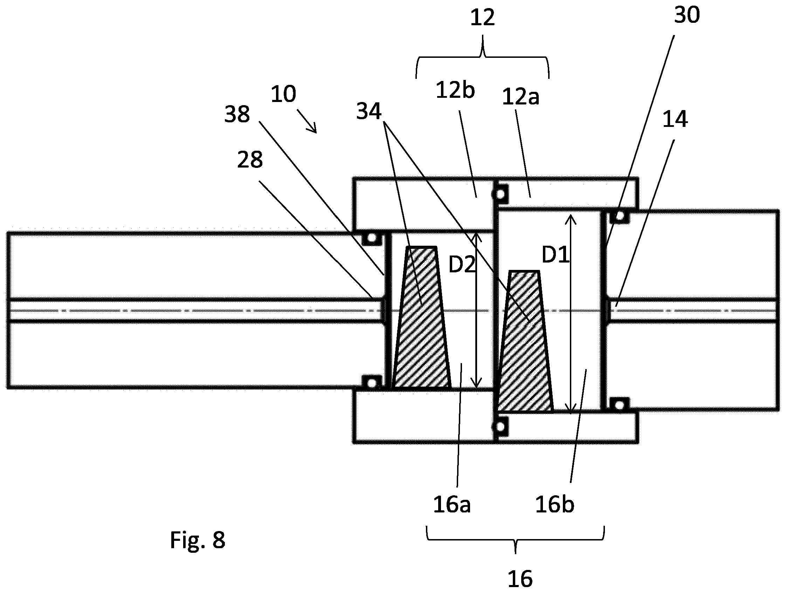

Figur 8 zeigt eine schematische Schnittansicht einer weiteren Ausführungsform einer erfindungsgemäßen Brühgruppe 10. In dieser Ausführungsform ist das Gehäuse 12 zweiteilig ausgebildet. Das Gehäuse weist einen ersten Gehäuseabschnitt 12a und einen zweiten Gehäuseabschnitt 12b auf. Der erste Gehäuseabschnitt 12a weist einen ersten Durchmesser D1 auf und der zweite Gehäuseabschnitt 12b weist einen zweiten Durchmesser D2 auf. Der zweite Durchmesser D2 ist kleiner als der erste Durchmesser D1. Beispielsweise entspricht der Durchmesser D1 dem Durchmesser 21, welche in Fig. 3 dargestellt ist, und der Durchmesser D2 entspricht dem Durchmesser 20, welcher in Figur 5 dargestellt ist.

Im Beispiel in Figur 8 ist bereits Kaffeemehl 34 sowohl in dem Gehäuseabschnitt 12a als auch in dem Gehäuseabschnitt 12b eingeführt worden. Es wäre jedoch auch denkbar, dass lediglich in einen der beiden Gehäuseabschnitte 12a, 12b Kaffeemehl 34 eingefüllt wird.

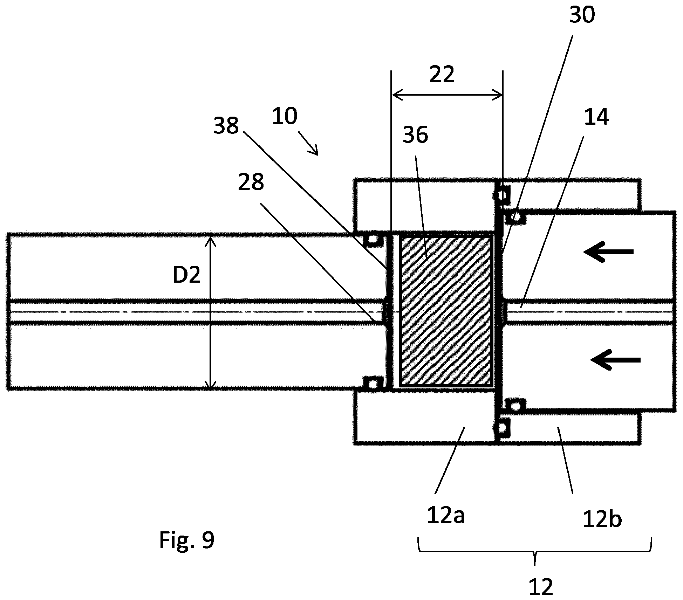

Figur 9 zeigt eine schematische Schnittansicht der weiteren Ausführungsform einer erfindungsgemäßen Brühgruppe 10 in einer ersten Stellung. In dieser Stellung wird das in den ersten Gehäuseabschnitt 12a und in den zweiten Gehäuseabschnitt 12b gefüllte Kaffeemehl 34 zu einem Kaffeekuchen 36 mit dem kleineren Durchmesser D2 geformt. Für diesen Vorgang wird der Kolben 14 axial von der rechten Seite zu der linken Seite verschoben, wie durch die Pfeile angedeutet. Durch diese Bewegung wird das sich im Gehäuseabschnitt 12a befindliche Kaffeemehl 34 in geeigneter Weise nach links in den sich anschließenden zweiten Gehäuseabschnitt 12b geschoben. Im Gehäuseabschnitt 12b wird auf diese Weise ein Kaffeekuchen 36 mit dem Durchmesser D2 gebildet. Die Begrenzungsfläche 38 des zweiten Kolbens 28 dient hierbei als Anschlag für den zu formenden Kaffeekuchen 36. Durch einen vorherbestimmten Hub des Kolbens 28 kann ferner die Höhe 22 des zu formenden Kaffeekuchens 36 eingestellt werden.

Es sei darauf hingewiesen, dass die Figur 9 lediglich das Funktionsprinzip veranschaulichen soll und den Übergang von großem Durchmesser D1 zu kleinen Durchmesser D2 lediglich dem Prinzip nach zeigt. Selbstverständlich können im Übergang von großem Durchmesser D1 zu kleinem Durchmesser D2 geeignete Mittel vorhanden sein, wie etwa eine Rutsche oder eine schiefe Bahn, die ein Verschieben des Kaffeemehls auch von großem Durchmesser D1 zu kleinen Durchmesser D2 ermöglichen.

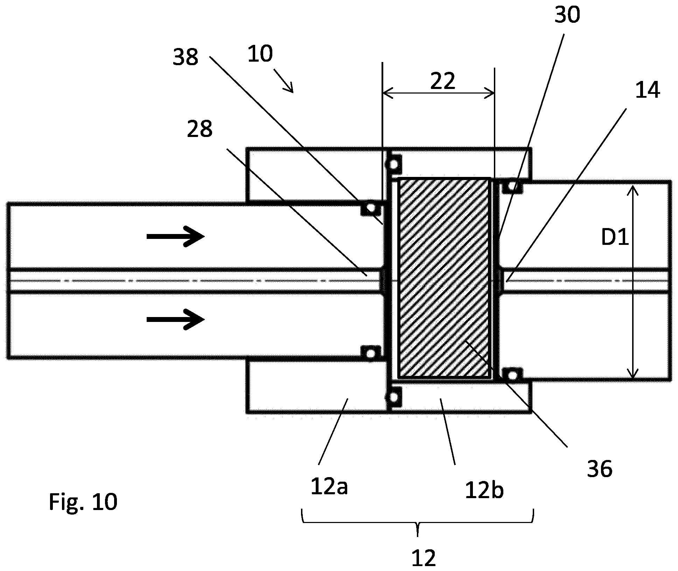

Figur 10 zeigt eine schematische Schnittansicht der weiteren Ausführungsform der erfindungsgemäßen Brühgruppe 10 in einer zweiten Stellung. In dieser Darstellung wird ein Kaffeekuchen 36 mit dem größeren Durchmesser D1 geformt. Für das Bilden eines Kaffeekuchens 36 mit dem Durchmesser D1 wird der Kolben 28 mit seiner Begrenzungsfläche 38 axial von links nach rechts verfahren. Das ursprünglich in den Gehäuseabschnitten 12a und 12b (siehe Figur 8) vorhandene Kaffeemehl 34 wird dadurch in den rechten Gehäuseabschnitt 12amit dem größeren Durchmesser D1 geschoben und dort verdichtet. Der rechte Kolben 14 und seine Begrenzungsfläche 30 bilden hierbei einen Anschlag aus, gegen den das Kaffeemehl 34 zur Bildung eines Kaffeekuchens 36 gedrückt wird. Auf diese Weise entsteht ein Kaffeekuchen 36 mit dem Durchmesser D1. Durch einen vorherbestimmten Hub des Kolbens 14 und/oder durch die eingefüllt Menge an Kaffeemehl kann ferner die Höhe 22 des Kaffeekuchens 36 eingestellte werden.

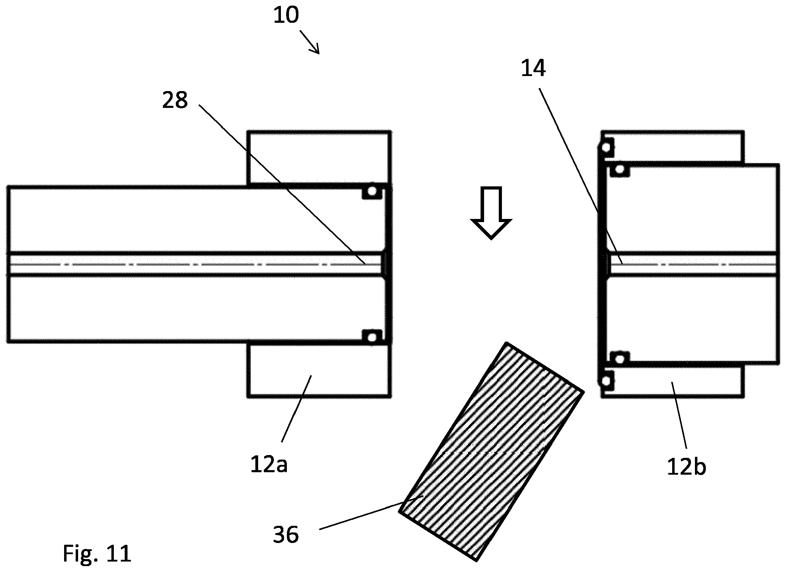

Figur 11 zeigt eine schematische Schnittansicht der weiteren Ausführungsform der erfindungsgemäßen Brühgruppe 10 in einer in einer dritten Stellung. In dieser Stellung wird der Kaffeekuchen 36 aus dem Gehäuse 12 entfernt. Dies kann beispielsweise dadurch erfolgen, dass die Gehäuseabschnitte 12a und 12b getrennt werden. Der Kaffeekuchen 36 kann dann aus dem Gehäuse 12 herausfallen. Ferner kann der Kaffeekuchen 36 auch mittels des Kolbens 14 und/oder des Kolben 28 aus dem Gehäuse 12 gedrückt werden.

Obwohl die vorliegende Erfindung anhand bevorzugter Ausführungsbeispiele vorstehend vollständig beschrieben wurde, ist sie darauf nicht beschränkt, sondern auf vielfältige Art und Weise modifizierbar.

So sei unter einer Kaffeemaschine in der Terminologie eine Kaffeemaschine mit automatischer Brühgruppe zu verstehen, wie etwa ein Kaffeevollautomat, eine Espressomaschine, eine Stand Alone Kaffeemaschine, eine HoReKa-Maschine und dergleichen.

Auch wenn im vorliegenden Fall ein im Wesentlichen zylinderförmiges Gehäuse vorgesehen ist, in welchem die entsprechenden zylinderförmigen Kolben axial verschieblich angeordnet sind, ist diese Ausgestaltung nicht zwingend notwendig und die Erfindung soll nicht darauf beschränkt werden, auch wenn diese Ausgestaltung besonders vorteilhaft ist. Vielmehr wäre auch ein anderer rohrförmiger Aufbau des Gehäuses denkbar, sofern die darin verlaufenden Kolben und Verstellvorrichtung entsprechend (Must Fit) ausgebildet sind.

Beispielsweise kann der erste Kolben zum zweiten Kolben versetzt angeordnet sein, beispielsweise exzentrisch zu diesem. Ferner ist es auch möglich, dass der erste Kolben und /oder zweite Kolben eine elliptische, ovale oder vieleckige Begrenzungsfläche aufweisen. Auch das rohrförmige Gehäuse kann einen Querschnitt aufweisen, welcher elliptisch, oval oder vieleckig ausgebildet ist.

### BEZUGSZEICHENLISTE

- 10: Brühgruppe
- 12: Gehäuse
- 12a: erster Gehäuseabschnitt
- 12b: zweiter Gehäuseabschnitt
- 14: erster Kolben
- 16: Brühkammer
- 18: Verstellvorrichtung
- 20: erster Durchmesser, Innendurchmesser des äußeren Zylinders, Durchmesser der Brühkammer
- 21: zweiter Durchmesser, Außendurchmesser des inneren Zylinders, Durchmesser der Brühkammer
- 22: Höhe der Brühkammer
- 24: äußerer Zylinder der Verstellvorrichtung
- 26: innerer Zylinder der Verstellvorrichtung
- 28: zweiter Kolben
- 30: (vertikale) Begrenzungsfläche
- 32: horizontale Achse
- 34: Kaffeemehl
- 36: Kaffeekuchen
- 38: (vertikale) Begrenzungsfläche

- D1: erster Durchmesser
- D2: zweiter Durchmesser

## Patentansprüche

1. Automatische Brühgruppe (10) für eine Kaffeemaschine zum Zubereiten einer Kaffeezubereitungsart,
mit einem rohrförmigen Gehäuse (12), in welchem zumindest ein erster Kolben (14) axial beweglich angeordnet ist, um eine Brühkammer (16) zur Aufnahme von Kaffeemehl (34) und zum Aufbrühen des Kaffeegetränks zu bilden,
mit einer Verstellvorrichtung (18), welche dazu ausgebildet ist, eine Querschnittsfläche und/oder einen Durchmesser (20) der Brühkammer (16) variabel zu verändern,
wobei der erste Kolben (14) verstellvorrichtungsseitig innerhalb des zylinderrohrförmigen Gehäuses (12) angeordnet ist und wobei ein zweiter Kolben (28) vorgesehen ist, der bezüglich der Brühkammer (16) gegenüberliegend zum ersten Kolben (14) angeordnet ist,
wobei der erste Kolben (14) und der zweite Kolben (28) brühkammerseitig jeweils eine Begrenzungsfläche (30, 38) aufweisen und wobei eine erste Begrenzungsfläche (30) des ersten Kolbens (14) geringer ist als eine zweite Begrenzungsfläche (38) des zweiten Kolbens (28).

2. Brühgruppe nach Anspruch 1,
**dadurch gekennzeichnet,**
**dass** die Verstellvorrichtung (18) dazu ausgebildet ist, die Höhe (22) der Brühkammer (16) variabel einzustellen.

3. Brühgruppe nach Anspruch 1,
**dadurch gekennzeichnet,**
**dass** die Verstellvorrichtung (18) derart ausgebildet ist, eine einzige, konstante Höhe (22) der Brühkammer (16) einzustellen.

4. Brühgruppe nach einem der vorstehenden Ansprüche, **dadurch gekennzeichnet,**
**dass** die Verstellvorrichtung (18) dazu ausgebildet ist, den Durchmesser der Brühkammer (16) stufenlos einzustellen.

5. Brühgruppe nach einem der vorstehenden Ansprüche, **dadurch gekennzeichnet,**
**dass** das rohrförmige Gehäuse (12) zylinderförmig ausgebildet ist und dass die Verstellvorrichtung (18) von dem rohrförmigen Gehäuse (12) umschlossen ist und zumindest einen äußeren Zylinder (24) und einen inneren Zylinder (26), welcher innerhalb des äußeren Zylinders (24) axial beweglich ausgebildet ist, aufweist.

6. Brühgruppe nach Anspruch 5,
**dadurch gekennzeichnet,**
**dass** zwischen dem äußeren Zylinder (24) und dem inneren Zylinder (26) zumindest ein weiterer Zylinder vorgesehen ist.

7. Brühgruppe nach einem der vorstehenden Ansprüche, **dadurch gekennzeichnet,**
**dass** der erste Kolben (14) starr mit der Verstellvorrichtung (18) ausgebildet ist.

8. Brühgruppe nach einem der Ansprüche 1 bis 6,
**dadurch gekennzeichnet,**
**dass** der erste Kolben (14) gegenüber der Verstellvorrichtung (18) axial verschiebbar ausgebildet ist.

9. Brühgruppe nach einem der vorstehenden Ansprüche, **dadurch gekennzeichnet,**
**dass** eine Steuereinrichtung vorgesehen ist, welche mit dem ersten Kolben (14) derart gekoppelt und ausgebildet ist, um die Position des ersten Kolbens (14) einzustellen.

10. Brühgruppe nach einem der vorstehenden Ansprüche, **dadurch gekennzeichnet,**
**dass** eine Steuereinrichtung vorgesehen ist, welche mit der Verstellvorrichtung (18) derart gekoppelt und ausgebildet ist, um eine Stellung der Verstellvorrichtung (18) einzustellen.

11. Brühgruppe nach einem der vorstehenden Ansprüche, **dadurch gekennzeichnet,**
**dass** das rohrförmige Gehäuse (12) einen ersten Gehäuseabschnitt (12a) und zumindest einen zweiten Gehäuseabschnitt (12b) aufweist, wobei der erste Gehäuseabschnitt(12a) einen zum zweiten Gehäuseabschnitt (12b) verschiedenen Durchmesser (D1, D2) aufweist, wobei die Verstellvorrichtung (18) ausgebildet ist, den ersten Gehäuseabschnitt (12a) oder den zweiten Gehäuseabschnitt (12b) als Brühkammer (16) auszubilden.

12. Brühgruppe nach einem der Ansprüche 1 bis 10,
**dadurch gekennzeichnet,**
**dass** der erste Kolben (14) sowie die Verstellvorrichtung (18) längs einer vertikalen Achse der Brühkammer (16) angeordnet sind.

13. Kaffeemaschine zum Zubereiten einer Kaffeezubereitungsart,
mit einer Steuereinrichtung, welche dazu ausgebildet ist, aus einer benutzerseitig eingestellten und vorgegebenen Menge an Kaffeemehl einen Soll-Durchmesser einer Brühkammer (16) zu bestimmen,
mit einer automatischen Brühgruppe (10) nach einem der Ansprüche 1 bis 12, deren Verstellvorrichtung (18) den Durchmesser (20) der Brühkammer (16) entsprechend dem von der Steuereinrichtung bestimmten Soll-Durchmesser einstellt.

14. Verfahren zum Zubereiten einer Kaffeezubereitungsart unter Verwendung einer automatischen Brühgruppe (10) nach einem der Ansprüche 1 bis 12 mit den Schritten:
Vorgeben einer Menge an Kaffeemehl, aus welcher das Kaffeegetränk zubereitet werden soll;
Berechnen eines Soll-Durchmessers der Brühkammer (16) abhängig von der vorgegebenen Menge an Kaffeemehl;
Einstellen des berechneten Soll-Durchmessers mittels der Verstellvorrichtung (18);
Einfüllen des Kaffeemehls in die Brühkammer (16) vor oder nach dem Einstellen des Soll-Durchmessers;
Verdichten des Kaffeemehls.

## Claims

1. Automatic brewing unit (10) for a coffee machine for making a type of coffee,
with a tubular housing (12) in which at least a first plunger (14) is axially displaceable in order to provide a brewing chamber (16) for receiving ground coffee (34) and brewing the coffee beverage,
with an adjustment device (18) provided to adjust a cross-sectional area and/or diameter (20) of the brewing chamber (16) in a variable manner,
wherein the first plunger (14) is arranged on the adjustment device side inside the cylindrical housing (12) and a second plunger (28) is arranged in respect of the brewing chamber (16) opposing the first plunger (14),
wherein the first plunger (14) and the second plunger (28) on the brewing chamber side each have a delimiting surface (30, 38) and wherein a first delimiting surface (30) of the first plunger (14) is smaller than a second delimiting surface (38) of the second plunger (28).

2. Brewing unit according to claim 1,
**characterised in that**
the adjustment device (18) is provided for the variable adjustment of the height (22) of the brewing chamber (16).

3. Brewing unit according to claim 1, c
**characterised in that**
the adjustment device (18) is provided such that a single, constant height (22) of the brewing chamber (16) can be set.

4. Brewing unit according to any one of the preceding claims, **characterised in that**
the adjustment device (18) is provided for adjusting the diameter of the brewing chamber (16) in a continuously adjustable manner.

5. Brewing unit according to any one of the preceding claims, **characterised in that**
the tubular housing (12) is cylindrical and **in that** the adjustment device (18) is enclosed by the tubular housing (12) and has at least an external cylinder (24) and an internal cylinder (26) which is constructed to be axially displaceable inside the external cylinder (24).

6. Brewing unit according to claim 5,
**characterised in that**
at least one additional cylinder is provided between the external cylinder (24) and the internal cylinder (26).

7. Brewing unit according to any one of the preceding claims, **characterised in that**
the first plunger (14) is constructed rigidly with the adjustment device (18).

8. Brewing unit according to any one of claims 1 to 6, **characterised in that**
the first plunger (14) is constructed to be axially displaceable in respect of the adjustment device (18).

9. Brewing unit according to any one of the preceding claims, **characterised in that**
a control device is provided which is coupled to the first plunger (14) and is constructed so as to adjust the position of the first plunger (14).

10. Brewing unit according to any one of the preceding claims, **characterised in that**
a control device is provided which is coupled to the adjustment device (18) and is constructed so as to adjust a position of the adjustment device (18).

11. Brewing unit according to any one of the preceding claims, **characterised in that**
the tubular housing (12) has a first housing portion (12a) and at least a second housing portion (12b), wherein the first housing portion (12a) has a diameter (D1, D2) different from that of the second housing portion (12b), wherein the adjustment device (18) is provided in order for the first housing portion (12a) or the second housing portion (12b) to act as a brewing chamber (16).

12. Brewing unit according to any one of claims 1 to 10, **characterised in that**
the first plunger (14) as well as the adjustment device (18) are arranged along a vertical axis of the brewing chamber (16) .

13. Coffee machine for making a type of coffee, with a control device provided in order to determine a target diameter of a brewing chamber (16) from a user-adjusted and predefined quantity of ground coffee,
with an automatic brewing unit (10) according to any one of claims 1 to 12, whose adjustment device (18) adjusts the diameter (20) of the brewing chamber (16) corresponding to the target diameter determined by the control device.

14. Method of making a type of coffee using an automatic brewing unit (10) according to any one of claims 1 to 12 with the steps:
specify a quantity of ground coffee, from which the coffee beverage is to be prepared;
calculate a target diameter of the brewing chamber (16) depending on the predefined quantity of ground coffee;
set the calculated target diameter by means of the adjustment device (18);
fill the ground coffee into the brewing chamber (16) before or after adjusting the target diameter;
compress the ground coffee.

## Revendications

1. Dispositif d'infusion automatique (10) pour une machine à café destinée à préparer un type de préparation de café, comportant :
un boîtier tubulaire (12), dans lequel au moins un premier piston (14) est disposé mobile axialement pour former une chambre d'infusion (16) destinée à recevoir le café moulu (34) et à infuser la boisson de café,
un moyen de réglage (18) configuré pour modifier de manière variable une surface en coupe transversale et/ou un diamètre (20) de la chambre d'infusion (16),
dans lequel le premier piston (14) est disposé du côté du moyen de réglage à l'intérieur du boîtier (12) qui a la forme d'un tube cylindrique et dans lequel un second piston (28) est prévu et disposé de manière opposée au premier piston (14) par rapport à la chambre d'infusion (16),
dans lequel le premier piston (14) et le second piston (28) présentent chacun une surface de limitation (30, 38) du côté de la chambre d'infusion et dans lequel une première surface de limitation (30) du premier piston (14) est plus petite qu'une seconde surface de limitation (38) du second piston (28) .

2. Dispositif d'infusion selon la revendication 1, **caractérisé en ce**
**que** le moyen de réglage (18) est configuré pour ajuster la hauteur (22) de la chambre d'infusion (16) de manière variable.

3. Dispositif d'infusion selon la revendication 1, **caractérisé en ce que**
le moyen de réglage (18) est configuré pour ajuster une seule hauteur constante (22) de la chambre d'infusion (16).

4. Dispositif d'infusion selon une des revendications précédentes, **caractérisé en ce que**
le moyen de réglage (18) est configuré pour ajuster en continu le diamètre de la chambre d'infusion (16).

5. Dispositif d'infusion selon une des revendications précédentes, **caractérisé en ce que**
le boîtier tubulaire (12) est configuré sous la forme d'un cylindre et le moyen de réglage (18) est entouré par le boîtier tubulaire (12) et présente au moins un cylindre extérieur (24) et un cylindre intérieur (26) qui est configuré mobile axialement à l'intérieur du cylindre extérieur (24).

6. Dispositif d'infusion selon la revendication 5, **caractérisé en ce que**,
entre le cylindre extérieur (24) et le cylindre intérieur (26), au moins un autre cylindre est prévu.

7. Dispositif d'infusion selon une des revendications précédentes, **caractérisé en ce que**
le premier piston (14) est configuré de manière rigide avec le moyen de réglage (18).

8. Dispositif d'infusion selon une des revendications 1 à 6, **caractérisé en ce que**
le premier piston (14) est configuré de manière à pouvoir se déplacer axialement par rapport au moyen de réglage (18).

9. Dispositif d'infusion selon une des revendications précédentes, **caractérisé en ce qu'**
un moyen de commande est prévu, qui est configuré et couplé au premier piston (14) de manière à ajuster la position du premier piston (14).

10. Dispositif d'infusion selon une des revendications précédentes, **caractérisé en ce qu'**
un moyen de commande est prévu, qui est configuré et couplé au moyen de réglage (18) pour ajuster une position du moyen de réglage (18).

11. Dispositif d'infusion selon une des revendications précédentes, **caractérisé en ce que**
le boîtier tubulaire (12) présente une première section de boîtier (12a) et au moins une seconde section de boîtier (12b), la première section de boîtier (12a) présentant un diamètre (D1, D2) différent de la seconde section de boîtier (12b), le moyen de réglage (18) étant configuré pour configurer la première section de boîtier (12a) ou la seconde section de boîtier (12b) sous la forme d'une chambre d'infusion (16).

12. Dispositif d'infusion selon une des revendications 1 à 10, **caractérisé en ce que**
le premier piston (14) ainsi que le moyen de réglage (18) sont disposés le long d'un axe vertical de la chambre d'infusion (16).

13. Machine à café destinée à préparer un type de préparation de café, comprenant :
un moyen de commande, qui est configuré pour définir un diamètre de consigne d'une chambre d'infusion (16) à partir d'une quantité prédéfinie de café moulu et ajustée par l'utilisateur,
un dispositif d'infusion automatique (10) selon une des revendications 1 à 12, dont le moyen de réglage (18) ajuste le diamètre (20) de la chambre d'infusion (16) conformément au diamètre de consigne défini par le moyen de commande.

14. Procédé destiné à préparer un type de préparation de café en utilisant un dispositif d'infusion automatique (10) selon une des revendications 1 à 12, comprenant les étapes consistant à :
prédéfinir une quantité de café moulu, à partir de laquelle la boisson de café doit être préparée ;
calculer un diamètre de consigne de la chambre d'infusion (16) en fonction de la quantité prédéfinie de café moulu ;
ajuster le diamètre de consigne à l'aide du moyen de réglage (18) ;
remplir le café moulu dans la chambre d'infusion (16) avant ou après l'ajustement du diamètre de consigne ;
comprimer le café moulu.
